# EUROPÄISCHE PATENTSCHRIFT

(11) **EP 0 849 485 B1**
(45) Veröffentlichungstag und Bekanntmachung des Hinweises auf die Patenterteilung: **12.09.2001**
(21) Anmeldenummer: 97119132.5
(22) Anmeldetag: 03.11.1997
(51) Int. Cl.: F16D 65/12

(54) **Zusammengesetzte Bremsscheibe**
Assembled brake disc
Disque de frein assemblé

(30) Priorität: 17.12.1996 DE 19652464
(43) Veröffentlichungstag der Anmeldung: 24.06.1998
(73) Patentinhaber: Bayerische Motoren Werke Aktiengesellschaft, 80788 München (DE)
(72) Erfinder: Pitzer, Franz, 80939 München (DE)

(56) Entgegenhaltungen:
- EP-A- 0 235 382
- DE-A- 4 420 758
- FR-A- 2 266 052
- PATENT ABSTRACTS OF JAPAN vol. 006, no. 061 (M-123), 20. April 1982 & JP 57 001835 A (HONDA MOTOR), 7. Januar 1982
- PATENT ABSTRACTS OF JAPAN vol. 004, no. 094 (M-019), 8. Juli 1980 & JP 55 051135 A (AKEBONO BRAKE), 14. April 1980

## Beschreibung

Die Erfindung bezieht sich auf eine zusammengesetzte Bremsscheibe nach dem Oberbegriff des Anspruchs 1.

Aus der DE 44 20 758 A1 ist eine derartige Bremsscheibe bekannt, deren schüsselförmige Nabe mit dem Reibring über eine Verzahnung in Umfangsrichtung drehfest verbunden ist. Die axiale Fixierung erfolgt über umgebogene Anschlagzungen sowie durch Prägungen an der Nabe. Ferner ist aus "Patent Abstracts of Japan, vol.004, no.094(M-0119), (,Juli 1980 & JP 55051135 A (Akebono Brake), 14-04-1980 eine derartige zusammengesetzte Bremsscheibe einer Scheibenbremse bekannt, wobei die Nabe aus zwei Nabenteilen und einem Trägerteil mit radial nach außen abstehenden Zähnen besteht, die in die Aussparungen des Reibrings eingreifen und wobei die Nabenteile axial an den beiden Seitenflächen im Bereich der Zähne anliegen und mit dem Trägerteil über axiale Bolzen verbunden sind.

Aufgabe der Erfindung ist es, diese bekannten Bremsscheiben weiterzubilden, mit dem Ziel, die Herstellkosten zu senken und vielfältige Formen der Nabe zu ermöglichen, insbesondere "topflose" zusammengesetzte Bremsscheiben herstellen zu können. Diese Aufgabe wird durch die Merkmale des Anspruchs 1 gelöst, vorteilhafte Weiterbildungen sind Inhalt der Unteransprüche.

Grundgedanke ist es dabei, die Nabe aus zwei einfach herzustellenden und vor dem Zusammenbau der Bremsscheibe eigenständigen Nabenteilen zusammenzusetzen, die den Reibring zwischen sich aufnehmen. Hierdurch ergibt sich eine besonders einfache Montage durch einfaches Zusammensetzen und anschließendes Verbinden der Nabenteile, ohne daß, wie bei der erstgenannten bekannten Bremsscheibe, beimZusammenbaunochMaterialumformungen (Umbiegen, Ausprägungen) vorzunehmen wären. Gegenüber der zweitgenannten bekannten Bremsscheibe ergibt sich ein einfacherer Zusammenbau. Die Nabenteile sind bevorzugt jeweils scheiben- oder ringförmig ausgebildet, können sich jedoch wiederum auch aus mehreren Teilen zusammensetzen.

Bei der erfindungsgemäßen Lösung nach Anspruch 1 sind jeweils zwei aufeinanderfolgende Zungen des Nabenteils (oder beider Nabenteile) axial derart versetzt, daß sie abwechselnd in die Aussparungen zwischen den Zähnen des Reibringes eingreifen bzw. an einer der beiden Seitenflächen des Reibringes anliegen. Zur Fixierung in Umfangsrichtung ist es hierbei ausreichend, wenn eines der beiden Nabenteile mit seinen Zungen in die Aussparungen des Reibrings eingreift. Selbstverständlich können jedoch auch beide Nabenteile in die Aussparungen eingesetzt werden. Zur Fixierung in Axialrichtung liegen beide Nabenteile an Seitenflächen des Reibrings an. Wenigstens eines der beiden Nabenteile bildet eine Funktionsfläche zur Anbindung der Bremsscheibe an das Fahrzeug und zur Aufnahme des Fahrzeugrades, das heißt, das Nabenteil ist radial nach innen fortgeführt.
Die Einrichtungen an Reibring und Nabenteil zur Fixierung in Umfangs- und gegebenenfalls in Axialrichtung sind anschaulich als "ähne mit dazwischenliegenden Aussparungen" bzw. "Zungen" bezeichnet.

Aufgrund der erfindungsgemäßen Ausführung der Nabe kann diese weitestgehend frei gestaltet werden. So kann eines der Nabenteile, wie in Anspruch 2 beschrieben, konventionell in Form eines Bremsscheibentopfes ausgeführt sein, wobei der Topf beispielsweise zylindrisch oder konisch geformt sein kann. Auch sind im Unterschied zum bekannten Stand der Technik Bremsscheiben mit einem kleinen, nicht bis an den Reibring heranreichenden Bremsscheibentopf möglich.

Die Ansprüche 3 und 4 beschreiben unterschiedliche Ausgestaltungen eines zweiten Nabenteiles, der zusammen mit einem topfförmigen ersten Nabenteil einen Bremsscheibentopf bildet.

Durch die Weiterbildung der Erfindung nach Anspruch 5 kann über zwei ebene Nabenteile eine "topflose" Bremsscheibe hergestellt werden. Derartige topflose Bremsscheiben finden beispielsweise bei Motorrädern oder Schienenfahrzeugen Anwendung. Die beiden Nabenteile können als Gleichteile ausgebildet sein. Ebenso ist es möglich, nur ein Nabenteil bis in den Anbindungsbereich für ein Fahrzeugrad fortzuführen, während das zweite Nabenteil sich nur unwesentlich über den Überdeckungsbereich mit dem Reibring hinaus erstreckt.

Anspruch 6 sieht ein zusätzliches Trägerteil vor, über das die Bremsscheibe an den Radträger angebunden wird, während die beiden Nabenteile als schrnale Ringe ausgeführt sind und lediglich der Fixierung des Reibrings auf der Nabe dienen. Bevorzugt ist das Trägerteil hierbei zwischen den beiden Nabenteilen angeordnet. Das Trägerteil kann hierbei in konventioneller Weise topfförmig ausgebildet sein, wobei zylindrische, kegelige oder beliebige andere Topfformen denkbar sind. Ebenso ist es möglich, durch ein weitestgehend ebenes Trägerteil eine topflose Bremsscheibe zu gestalten.

Durch die Weiterbildung der Erfindung nach Anspruch 7ergeben sich niedrigere Herstellkosten, da die Zungen mit geringer Paßgenauigkeit hergestellt werden können. Die in die Aussparung eingreifenden Zungen der beiden Nabenteile sind in Umfangsrichtung kleiner dimensioniert als die Bogenlänge der Aussparungen. Nach dem paarweisen Einsetzen der Nabenteile in die Aussparungen des Reibrings werden die Nabenteile so gegeneinander verdreht, daß die Zungen des ersten Nabenteils an den Zahnflanken der einen und die Zungen des anderen Nabenteils an der Zahnflanken der anderen Drehrichtung zur Anlage kommen. In dieser Lage werden die beiden Nabenteile miteinander verbunden. Die Verbindung kann beispielsweise durch Punktschweißen erfolgen. Bei einer Nietverbindung werden die Nietlöcher erst nach dem Verdrehen der beiden Nabenteile gebohrt. Alternativ können die Nietlöcher (mit Übermaß) auch vor dem Zusammensetzen angebracht werden, wobei die Nieten diese Löcher in jedem Fall ausfüllen müssen, um eine spielfreie Verbindung zu gewährleisten. Die Bremskraft wird bei der Lösung nach Anspruch 7 für jede Drehrichtung des Fahrzeugrades nur über jeweils eines der beiden Nabenteile unmittelbar übertragen.

Die schaufelförmigen Luftleitelemente gemäß Anspruch 8 können in einfacher Weise an den Nabenteilen oder am Trägerteil angebracht sein. Durch die verbesserte Kühlluftzuführung wird die Belastbarkeit der Bremsscheibe erhöht.

Durch die erfindungsgemäße Verbundbauweise können Reibringe verschiedenster Materialien und Abmessungen (Dicke, Außendurchmesser) nach einem Baukastenprinzip kostengünstig mit unterschiedlichen Nabenteilen und ggf. Trägerteilen kombiniert werden, um verschiedene Geometrien für den Bremsscheibentopf zu erzielen. insbesondere sind auch "topflose" Bremsscheiben möglich. Kommen besonders schwer zu bearbeitende und/oder teure Materialien für die Reibringe zum Einsatz, so kann die Anzahl der bereit zu stellenden Reibringgrößen reduziert werden, da die Anpassung an verschiedene Fahrzeugtypen durch die kostengünstig herzustellenden Nabenteile und ggf. Trägerteile erfolgen kann. Die Naben- und Trägerteile sind bevorzugt einfach heizustellende Blechstanzteile, die über alle bekannten und geeigneten Verbindungstechniken, wie z. B. Punktschweißen, Nieten, Stanznieten, Clinchen, etc. miteinander verbunden werden können.

Der Reibring ist gegenüber der Nabe in radialer Richtung nicht fixiert, so daß eine unterschiedliche Wärmeausdehnung von Reibring und Nabe nicht behindert wird. Ein derartiger Ausgleich der radialen Dehnungen ist vor allem bei unterschiedlichen Materialien für Reibring und Nabe von Bedeutung. Somit werden temperaturbedingte innere Spannungen und unerwünschte Bauteilverformungen (Schirmung der Bremsscheibe) zuverlässig vermieden.

Mögliche Ausführungsbeispiele der Erfindung sind nachfolgend in der Zeichnung dargestellt und werden näher beschrieben. Es zeigt:
- Fig. 1: ein erstes Ausführungsbeispiel der Erfindung in Explosionsdarstellung,
- Fig. 2: den Gegenstand von Fig. 1 in perspektivischer Darstellung, mit teilweise entferntem Reibring,
- Fig. 3: eine Seitenansicht des ersten Ausführungsbeispiels mit teilweiser Schnittdarstellung,
- Fig. 4: eine Schnittdarstellung entlang der Schnittverlaufslinie IV-IV in Fig. 3,
- Fig. 5: ein zweites Ausführungsbeispiel der Erfindung im Schnitt,
- Fig. 6: eine Schnittdarstellung eines dritten Ausführungsbeispiels,
- Fig. 7: eine perspektivische Darstellung des Gegenstand von Fig. 6 und
- Fig. 8: ein weiteres Ausführungsbeispiel der Erfindung.

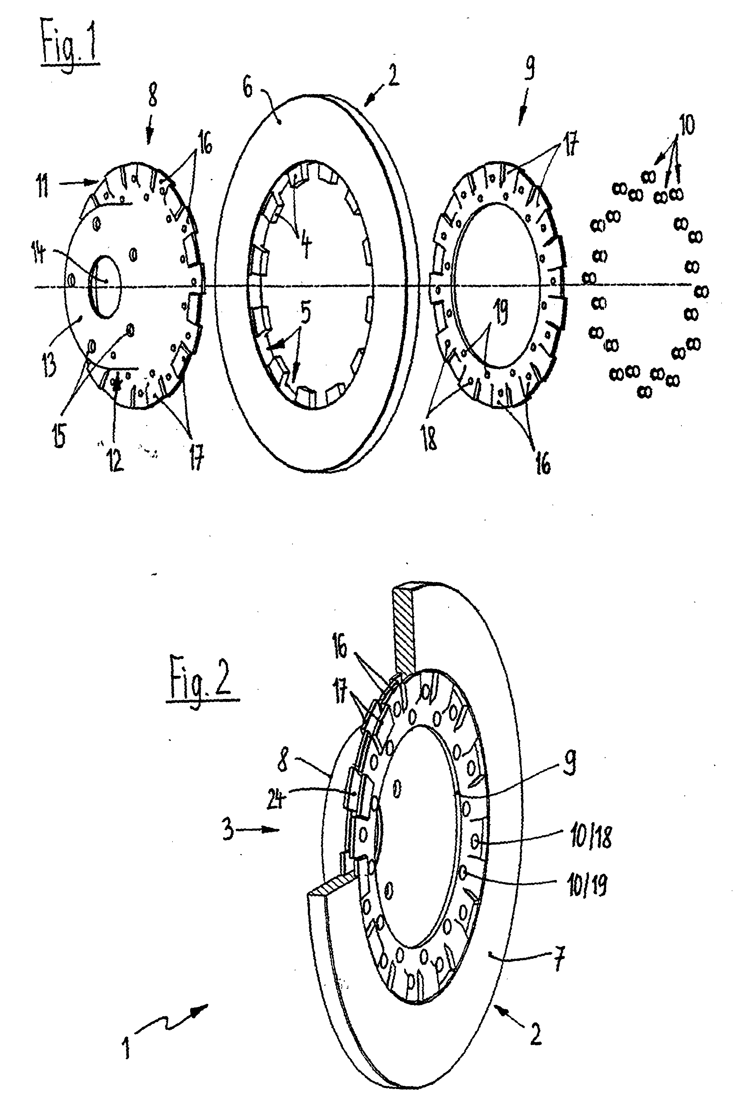

Die Fig. 1 bis 4 zeigen ein erstes Ausführungsbeispiel einer zusammengesetzten Bremsscheibe 1 für ein Kraftfahrzeug. Die Bremsscheibe 1 besteht aus einem Reibring 2 und einer in ihrer Gesamtheit mit 3 bezeichneten Nabe. Wie insbesondere aus Fig. 1 hervorgeht, weist der Reibring 2 radial nach innen gerichtete Zähne 4 auf, deren (stirnseitige) Flanken Aussparungen 5 begrenzen. Nicht dargestellte Bremsbacken wirken mit der äußeren und inneren Seitenfläche 6 bzw. 7 des Reibringes zusammen. Die Nabe 3 besteht aus einem äußeren und einem inneren Nabenteil 8 bzw. 9, die über eine Vielzahl von Nieten 10 miteinander verbunden sind. Das äußere Nabenteil 8 ist topfförmig aufgebaut und besteht aus einem Führungsabschnitt 11, einem zylindrischen Topfbereich 12 sowie einem Boden 13. Der Boden 13 dient der Befestigung des Nabenteils 3 an einem nicht dargestellten Radträger sowie der Anbindung eines Fahrzeugrads. Hierzu ist eine Mittenöffnung 14 sowie eine Mehrzahl von Befestigungslöchem 15 für Radschrauben vorgesehen. Das innere Nabenteil 9 hat die Form eines im wesentlichen ebenen Rings.

Die beiden Nabenteile 8 und 9 weisen jeweils radial außenliegend erste und zweite Zungen 16 bzw. 17 auf. Gegenüber den ersten Zungen 16 sind die zweiten Zungen 17 um die halbe Dicke der Zähne 4 des Reibrings 2 axial versetzt. Die ersten Zungen 16 sind mit Löchern 18 für die Durchführung der Nieten 10 versehen. Unterhalb bzw. radial innerhalb der zweiten Zungen 17 sind weitere Löcher 19 für die Nieten 10 vorgesehen.

Zur Herstellung der erfindungsgemäßen Bremsscheibe 1 werden zunächst die Nabenteile 8 und 9 von der fahrzeugäußeren bzw. der fahrzeuginneren Seite so an den Reibring 2 herangeführt, daß jeweils die ersten Zungen 16 in die Aussparungen 5 des Reibrings 2 eingreifen und die Zungen 16 der beiden Nabenteile 8 und 9 innenseitig aneinander zur Anlage kommen. Da die Breite b der Zungen 16 bzw. 17 kleiner ist als die lichte Weite I der Aussparungen 5, befinden sich die Nabenteile 8 und 9 zunächst mit Spiel in den Aussparungen 5. Nunmehr werden die Nabenteile 8 und 9 gegeneinander verdreht, bis im dargestellten Ausführungsbeispiel einerseits das äußere Nabenteil 8 an den in Richtung des Drehpfeils 20 beanspruchten Flanken 21 der Zähne 4 des Reibrings 2 und andererseits das innere Nabenteil 9 an den in Drehrichtung 22 beanspruchten Flanken 23 zur Anlage kommt. Der Winkel α, um den die beiden Nabenteile 8 und 9 gegeneinander verdreht sind, ist in Fig. 3 dargestellt. Auch Fig. 2 zeigt anschaulich den Winkelversatz der beiden Nabenteile 8 und 9. in der dargestellten spielfreien Anordnung werden die beiden Nabenteile 8 und 9 über die Nieten 10 miteinander verbunden.

Bei der erfindungsgemäßen Bremsscheibe 1 werden die in Umfangsrichtung wirkenden Bremskräfte über die ersten Zungen 16 der beiden Nabenteile 8 und 9 vom Reibring 2 auf die Nabe 3 übertragen. Die Fixierung des Reibrings 2 in axialer Richtung auf der Nabe 3 erfolgt durch die zweiten Zungen 17. Die Nieten 10 stellen eine spielfreie Einbindung des Reibringes 2 zwischen den beiden Nabenteilen 8 und 9 sicher. Der Reibring 2 kann jedoch bei unterschiedlichen Temperaturdehnungen von Reibring 2 und Nabe 3 in radialer Richtung entlang der Innenseiten 24 der zweiten Zungen 17 "wandern".

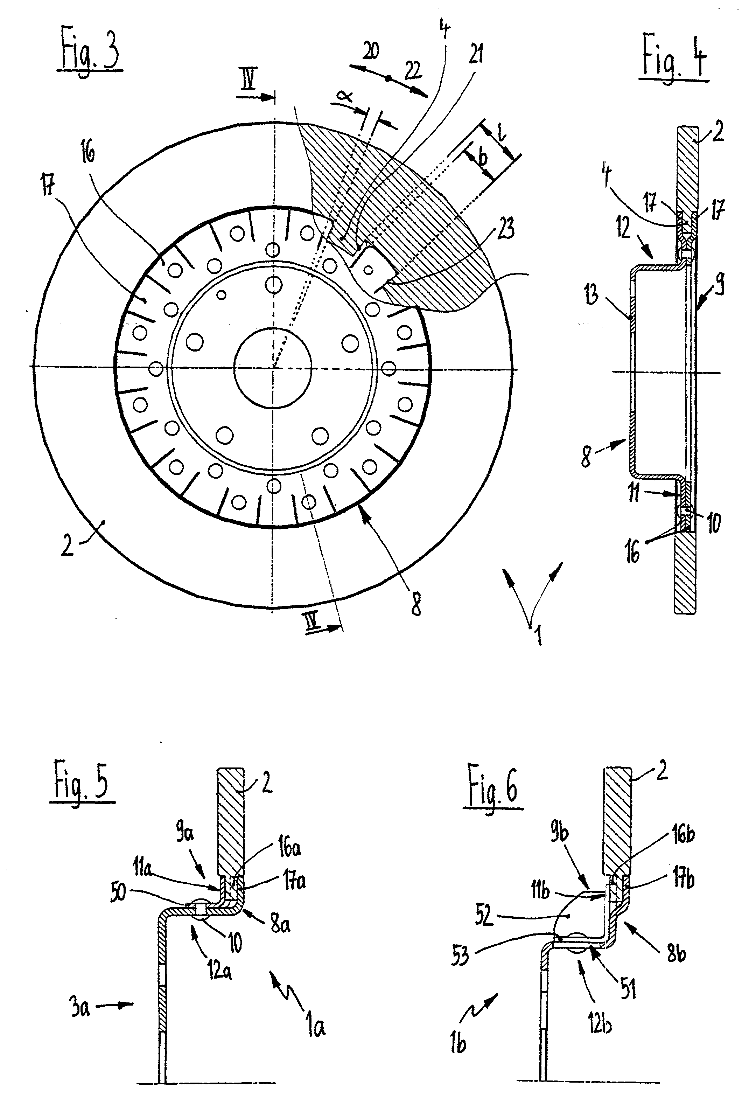

Auch die beiden Ausführungsbeispiele gemäß den Fig. 5 bis 7 zeigen zusammengesetzte Bremsscheiben 1a bzw. 1b mit einem Bremsscheibentopf.

Bei der Bremsscheibe 1a überträgt lediglich der innere Nabenteil 8a Kräfte in Umfangsrichtung. Hierzu weist er erste Zungen 16a (gestrichelt gezeichnet) auf. Die axiale Fixierung des Reibrings 2 gegenüber der Nabe 3a erfolgt einerseits durch die zweiten Zungen 17a des inneren Nabenteils 8a und andererseits durch das äußere Nabenteil 9a. Das Nabenteil 9a ist in Form eines ringförmigen Flansches ausgebildet, mit einem parallel zum Reibring 2 verlaufenden Führungsabschnitt 11a und einem etwa parallel zum Topfbereich 12a der Nabe 3a verlaufenden Befestigungsabschnitt 50, durch den die Nieten 10 hindurchgeführt sind.

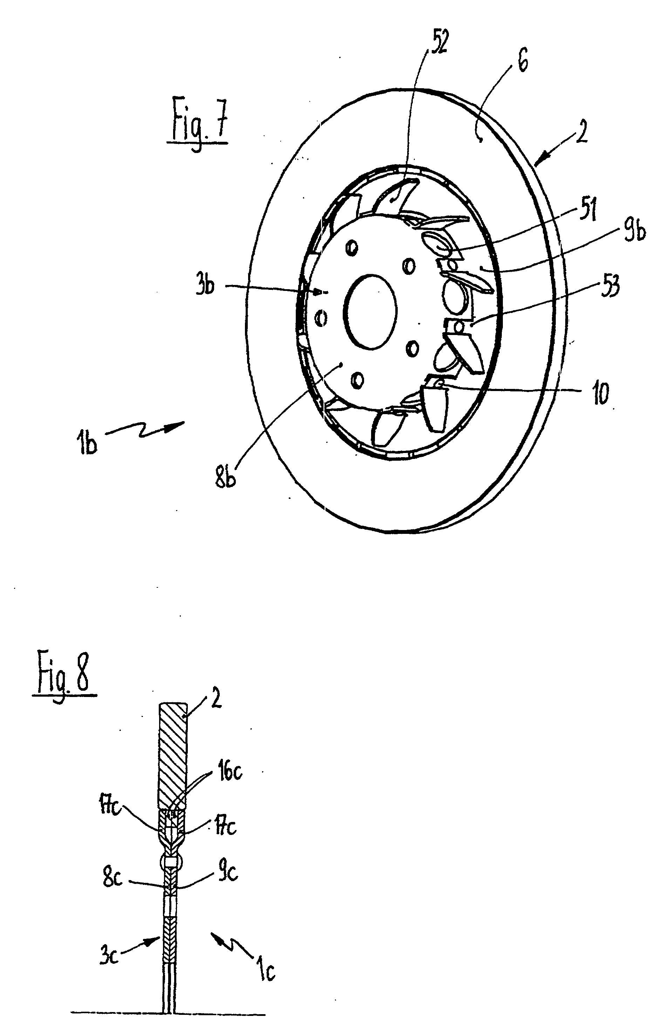

Die Fig. 6 und 7 zeigen eine Variante des zweiten Ausführungsbeispiels mit kleinerem Bremsscheibentopf. Auch hier erfolgt die Kraftübertragung in Umfangsrichtung über die ersten Zungen 16b des inneren Nabenteils 8b, während die axiale Fixierung des Reibrings 2 einerseits durch die zweiten Zungen 17b des Nabenteils 8b und andererseits durch den Führungsabschnitt 11b des äußeren Nabenteils 9b erfolgt. Wie insbesondere aus Fig. 7 hervorgeht, ist das innere Nabenteil 8b mit kreisrunden Durchbrüchen 51 versehen. Das äußere Nabenteil 9b weist Ausstanzungen auf, durch die laschenförmige Luftleitelemente 52 gebildet werden. Diese sind gegenüber dem zylindrischen Befestigungsabschnitt 53 des äußeren Nabenteils 9b abgebogen und haben die Form von Luftleitschaufeln. Durch die Ausbildung gemäß den Fig. 6 und 7 wird ein Kühlluftstrom von der Innenseite des Topfes über die Durchbrüche 51 an die äußere Seitenfläche 6 des Reibringes 2 geschaffen.

Das weitere Ausführungsbeispiel gemäß Figur 8 zeigt eine sogenannte "topflose" Bremsscheibe 1c. Die Nabe 3c der Bremsscheibe 1c wird von zwei als Gleichteilen ausgebildeten Nabenteilen 8c und 9c gebildet. Die ersten Zungen 16c (strichliert dargestellt) übertragen in bereits beschriebener Weise Kräfte in Umfangsrichtung, während die zweiten Zungen 17c den Reibring 2 axial fixieren.

## Patentansprüche

1. Zusammengesetzte Bremsscheibe einer Scheibenbremse, bestehend aus einem Reibring (2) mit radial nach innen gerichteten Zähnen (4) und einer Nabe (3, 3a, 3c), die bezüglich der Umfangsrichtung der Bremsscheibe (1, 1a bis 1c) formschlüssig in Aussparungen (5) zwischen den Zähnen (4) des Reibrings (2) eingreift, während die axiale Fixierung über beidseitig des Reibrings (2) vorgesehene Nabenabschnitte erfolgt,
**dadurch gekennzeichnet, daß** die Nabe (3, 3a bis 3c) aus zwei vor dem Zusammensetzen eigenständigen Nabenteilen (8, 8a bis 8c bzw. 9, 9a bis 9c) besteht, die axial zu beiden Seiten am Reibring (2) anliegen und miteinander verbunden sind, wobei wenigstens ein Nabenteil (8, 8a bis 8c bzw. 9, 9c) erste und zweite axial gegeneinander versetzte Zungen (16, 16a bis 16c bzw. 17, 17a bis 17c) aufweist und die ersten Zungen (16, 16a bis 16c) in die Aussparungen (5) des Reibrings (2) eingreifen, während die zweiten Zungen (17, 17a bis 17c) und gegebenenfalls das andere Nabenteil (9a, 9b) an den Seitenflächen (6, 7) des Reibrings (2) im Bereich seiner Zähne (4) anliegen.

2. Bremsscheibe nach Anspruch 1,
**dadurch gekennzeichnet, daß** das erste Nabenteil (8, 8a, 8b) topfförmig ist, mit einem parallel zum Reibring (2) verlaufenden und gegebenenfalls Zungen (16, 16a, 16b bzw. 17, 17a, 17b) tragenden Führungsabschnitt (11, 11a, 11b), einem zylindrischen oder kegeligen Topfbereich (12) und einem parallel zum Reibring (2) verlaufenden Boden (13).

3. Bremsscheibe nach Anspruch 2,
**dadurch gekennzeichnet, daß** das zweite Nabenteil (9) im wesentlichen die Form einer ebenen Scheibe oder eines ebenen Ringes aufweist.

4. Bremsscheibe nach Anspruch 2,
**dadurch gekennzeichnet, daß** das zweite Nabenteil (9a, 9b) einen parallel zum Reibring (2) verlaufenden und gegebenenfalls Zungen tragenden Führungsabschnitt (11a, 11b) und einen abgewinkelten, parallel zum Topfbereich (12) des ersten Nabenteils (8a, 8b) verlaufenden Befestigungsabschnitt (50, 53) aufweist.

5. Bremsscheibe nach Anspruch 1,
**dadurch gekennzeichnet, daß** das erste und zweite Nabenteil (8c bzw. 9c) im wesentlichen die Form einer ebenen Scheibe oder eines ebenen Ringes aufweisen.

6. Bremsscheibe nach Anspruch 1,
**dadurch gekennzeichnet, daß** die Nabenteile mit einem zusätzlichen Trägerteil verbunden sind, welches entweder im wesentlichen topfförmig ist oder im wesentlichen die Form einer ebenen Scheibe aufweist.

7. Bremsscheibe nach einem der vorangegangenen Ansprüche
**dadurch gekennzeichnet, daß** beide Nabenteile (8, 9) Zungen (16, 17) aufweisen, wobei die Erstreckung (b) der Zungen (16) in Umfangsrichtung der Bremsscheibe (1) kleiner ist als die entsprechende Erstreckung (1) der Aussparungen (5) im Reibring (2) und die beiden Nabenteile (8, 9) vor ihrer Verbindung miteinander bzw. am Trägerteil so gegeneinander verdreht werden, daß die Stirnseiten ihrer Zungen (16) wechselseitig an den Stirnseiten (21, 23) der Zähne (4) des Reibrings (2) zur Anlage kommen.

8. Bremsscheibe nach einem der vorangegangenen Ansprüche,
**dadurch gekennzeichnet, daß** wenigstens eines der Nabenteile (9b) und/oder das Trägerteil Luftleitelemente (52) zur Zuführung von Kühlluft zum Reibring (2) aufweisen.

## Claims

1. An assembled brake disc of a disc brake comprising a friction ring (2) with radially inwardly directed teeth (4) and a hub (3, 3a, 3c) which, relative to the peripheral direction of the brake disc (1, 1a to 1c) engages positively in recesses (5) between the teeth (4) of the friction ring (2) and is axially fixed via hub portions on both sides of the friction ring (2),
**characterised in that** the hub (3, 3a to 3c) comprises two parts (8, 8a to 8c or 9, 9a to 9c) which are independent before fitting together and axially abut the friction ring (2) on both sides and are interconnected, wherein at least one hub part (8a, 8a to 8c or 9, 9c) has first and second tongues (16, 16a to 16c or 17, 17a to 17c) offset axially relative to one another and the first tongues (16, 16a to 16c) engage in the recesses (5) in the friction ring (2) whereas the second tongues (17, 17a to 17c) and, if required, the other hub part (9a, 9c) abut the sides (6, 7) of the friction ring (2) in the region of the teeth (4) thereof.

2. A brake disc according to claim 1, **characterised in that** the first hub part (8, 8a, 8b) is pot-shaped and comprises a guide portion (11, 11a, 11b) extending parallel to the friction ring (2) and if required formed with tongues (16, 16a, 16b or 17, 17a, 17b), a cylindrical or conical pot region (12), and a base (13) parallel to the friction ring (2).

3. A brake disc according to claim 2, **characterised in that** the second hub part (9) has substantially the shape of a flat disc or a flat ring.

4. A brake disc according to claim 2, **characterised in that** the second hub part (9a, 9b) comprises a guide portion (11a, 11b) extending parallel to the friction ring (2) and if required bearing tongues, and a bent fastening portion (50, 53) extending parallel to the pot region (12) of the first hub part (8a, 8b).

5. A brake disc according to claim 1, **characterised in that** the first and the second hub part (8c, 9c) are substantially in the shape of a flat disc or a flat ring.

6. A brake disc according to claim 1, **characterised in that** the hub parts are connected to an additional supporting part which is either substantially pot-shaped or has substantially the shape of a flat disc.

7. A brake disc according to any of the preceding claims, **characterised in that** both hub parts (8, 9) have tongues (16, 17), wherein the extent (b) of the tongues (16) in the peripheral direction of the brake disc (1) is less than the corresponding extent (I) of the recesses (5) in the friction ring (2), and the two hub parts (8, 9) before being joined together or to the supporting part are rotated relative to one another so that the end faces of their tongues (16) alternately abut the end faces (21, 23) of the teeth (4) on the friction ring (2).

8. A brake disc according to any of the preceding claims, **characterised in that** at least one hub part (9b) and/or the supporting part have air guide elements (52) for supplying cooling air to the friction ring (2).

## Revendications

1. Disque de frein assemblé d'un frein à disque, composé d'un anneau de friction (2) portant des dents (4) dirigées radialement vers l'intérieur, d'un moyeu (3, 3a, 3c), en prise selon la direction périphérique du disque de frein (1, 1a, 1b, 1c) par combinaison de formes dans des évidements (5) séparant les dents (4) de l'anneau de friction (2), la fixation axiale étant assurée par des parties de moyeu situées de part et d'autre de l'anneau de friction (2),
**caractérisé en ce que**
- le moyeu (3, 3a, 3b, 3c) est composé de deux parties individuelles avant l'assemblage (8, 8a, 8b, 8c ou 9, 9a, 9b, 9c), appliquées axialement sur les deux côtés de l'anneau de friction (2) et reliées entre elles,
- au moins une partie de moyeu (8, 8a, 8b, 8c ou 9, 9c) comporte des premières et secondes languettes (16, 16a, 16b, 16c, 17, 17a, 17b, 17c) décalées axialement, les premières (16, 16a, 16b, 16c) étant engagées dans les évidements (5) de l'anneau de friction (2), tandis que les secondes (17, 17a, 17b, 17c) et éventuellement l'autre partie de moyeu (9a, 9b) sont appliquées sur les faces latérales (6, 7) de l'anneau de friction (2), dans la zone de ses dents (4).

2. Disque de frein selon la revendication 1,
**caractérisé en ce que**
la première partie de moyeu (8, 8a, 8b) a la forme d'un pot comprenant une partie de guidage (11, 11a, 11b) parallèle à l'anneau de friction (2) et portant éventuellement des languettes (16, 16a, 16b, ou 17, 17a, 17b), une zone de pot (12) cylindrique ou conique et un fond (13) parallèle à l'anneau de friction (2).

3. Disque de frein selon la revendication 2,
**caractérisé en ce que**
la seconde partie de moyeu (9) a essentiellement la forme d'un disque plan ou d'un anneau plan.

4. Disque de frein selon la revendication 2,
**caractérisé en ce que**
la seconde partie de moyeu (9a, 9b) comprend une partie de guidage (11a, 11b) parallèle à l'anneau de friction (2) et portant éventuellement des languettes, ainsi qu'une partie de fixation (50, 53) parallèle à la zone de pot (12) de la première partie de moyeu (8a, 8b).

5. Disque de frein selon la revendication 1,
**caractérisé en ce que**
la première et la seconde partie de moyeu (8c ou 9c) ont chacune essentiellement la forme d'un disque plan ou d'un anneau plan.

6. Disque de frein selon la revendication 1,
**caractérisé en ce que**
les parties de moyeu sont reliées à une partie porteuse complémentaire, qui a essentiellement la forme d'un pot ou d'un disque plan.

7. Disque de frein selon l'une quelconque des revendications précédentes,
**caractérisé en ce que**
les deux parties de moyeu (8, 9) présentent des languettes (16, 17) et selon la direction périphérique du disque de frein (1), les languettes (16) ont une dimension (b) inférieure à la dimension correspondante (1) des évidements (5) de l'anneau de friction (2), les deux parties de moyeu (8, 9) avant leur liaison entre elles ou avec la partie porteuse, étant tournées l'une par rapport à l'autre de manière que les faces frontales de leurs languettes (16) viennent alternativement s'appliquer sur les faces frontales (21, 23) des dents (4) de l'anneau de friction (2).

8. Disque de frein selon l'une quelconque des revendications précédentes,
**caractérisé en ce qu'**
au moins une des parties de moyeu (9b) et/ou la partie porteuse comportent des éléments directeurs d'air (52) pour amener de l'air frais à l'anneau de friction (2).
